# EUROPEAN PATENT SPECIFICATION

(11) **EP 4 112 794 B1**
(45) Date of publication and mention of the grant of the patent: **31.07.2024**
(21) Application number: 21761194.6
(22) Date of filing: 22.02.2021
(51) Int. Cl.: B29B 11/16, B29C 70/16, B29C 70/22, D04H 3/002, D04H 3/04, D04H 3/115, B32B 5/02, B32B 5/12, B32B 5/26, B32B 7/09

(54) **STITCHED REINFORCING FIBER BASE MATERIAL, PREFORM MATERIAL, FIBER REINFORCED COMPOSITE MATERIAL, AND MANUFACTURING METHODS FOR SAME**
GEHEFTETES VERSTÄRKUNGSFASERGRUNDMATERIAL, VORFORMMATERIAL, FASERVERSTÄRKTER VERBUNDSTOFF UND HERSTELLUNGSVERFAHREN DAFÜR
SUBSTRAT COUSU DE FIBRES DE RENFORCEMENT, MATÉRIAU DE PRÉFORME, MATÉRIAU COMPOSITE RENFORCÉ PAR DES FIBRES, ET PROCÉDÉS DE FABRICATION DE CEUX-CI

(30) Priority: 28.02.2020 JP 2020033681; 23.06.2020 JP 2020107771
(43) Date of publication of application: 04.01.2023
(73) Proprietor: Teijin Limited, Osaka 530-0005 (JP)
(72) Inventor: AKAMATSU, Tetsuya, Osaka-shi Osaka 530-0005 (JP); OSAKI, Kohei, Osaka-shi Osaka 530-0005 (JP); KANEKO, Toru, Osaka-shi Osaka 530-0005 (JP)
(74) Representative: Carpmaels & Ransford LLP
(86) International application number: PCT/JP2021/006530
(87) International publication number: WO 2021/172246

(56) References cited:
- WO-A1-2017/104481
- WO-A1-2018/083734
- WO-A1-2020/031834
- JP-A- 2012 511 450
- JP-A- 2013 522 486
- JP-A- 2021 055 202
- PIERRE-JACQUES LIOTIER ET AL.: "Microcracking of composites reinforced by stitched multiaxials subjected to cyclical hygrothermal loadings", COMPOSITES: PART A, vol. 42, 2011, pages 425 - 437, XP028357726

## Description

### [Technical Field]

The present invention relates to a stitched fiber-reinforced substrate material, a preform material, and a fiber reinforced composite material, and manufacturing methods for these materials.

More specifically, the present invention relates to a stitched fiber-reinforced substrate material which is formed by integrating a multiple reinforcement fiber layers using stitching yarns, and a preform material and a fiber reinforced composite material containing the stitched fiber-reinforced substrate material.

### [Background Art]

The fiber reinforced composite material, due to its lightness in weight, high strength, and high rigidity, is used in a wide range of fields, including sports/leisure applications, such as fishing rods and golf shafts, and industrial applications, such as automobiles and aircraft. There is adopted a method for molding a fiber reinforced composite material: molding prepreg (intermediate substrate material) which is formed into a sheet in advance by impregnating a fiber-reinforced substrate material with resin. Other molding methods include a resin transfer molding (RTM) method: impregnating a fiber-reinforced substrate material in a molding die with a liquid resin formulation and curing or solidifying the resin to obtain a fiber reinforced composite material.

Since the fiber reinforced composite material preferably has isotropy, the fiber-reinforced substrate material is preferably composed of a multiple layers having different fiber axial directions. Examples of the fiber-reinforced substrate material composed of a multiple layers include woven or knitted fabrics and multiaxial woven fabrics. The fiber-reinforced substrate material made of such a woven fabric causes the reinforcement fibers to be crimp at the intersection of the warp and the weft and then to lower the linearity, which may result in insufficiently high mechanical properties of the obtained fiber reinforced composite material. On the other hand, in the stitched fiber-reinforced substrate material, since a laminate is made by laminating a multiple reinforcement fiber sheets made of unidirectionally drawn and aligned reinforcement fiber and the laminate is stitched through the laminate in the direction of thickness using a stitching yarn, and thus a multiple reinforcement fiber sheets is integrated, the reinforcement fibers are unlikely to be crimp, and thus the mechanical properties of the obtained fiber reinforced composite material are easily improved.

However, when a fiber reinforced composite material is produced using such a stitched fiber-reinforced substrate material, microcracks may be generated around the stitching yarn. This microcrack may gradually develop and lower the mechanical properties of the fiber reinforced composite material.

Various studies have been made to suppress the generation of this microcrack. PTL 1 discloses that the formation of microcracks can be suppressed in the obtained fiber reinforced composite material by using a stitching yarn having a small yarn count, specifically 30 dTex or less.

NPL 1 discloses that the formation of microcracks can be suppressed by reducing the resin-rich part in the fiber reinforced composite material as much as possible to improve the toughness of the interface between the stitching yarn and the matrix resin.

However, even if these techniques are used, the effect of suppressing microcracks generated at the interface between the stitching yarn and the matrix resin phase has been still unsatisfactory.

### [Summary of Invention]

### [Technical Problem]

An object of the present invention is to provide a stitched fiber-reinforced substrate material capable of suppressing the formation of microcracks in a fiber reinforced composite material.

### [Solution to Problem]

As a result of studies to solve the above problems, the present inventors have found that many microcracks are generated at the interface between the stitching yarn and the matrix resin phase. Therefore, they examined the stitching yarns constituting the stitched fiber-reinforced substrate material and have found that the formation of microcracks can be reduced by using a stitching yarn having a linear expansion coefficient within a specific range after heated at a specific temperature, and have completed the present invention.

The present invention that achieves the above object is a stitched fiber-reinforced substrate material formed by stitching reinforcement fiber sheets made of reinforcement fibers using stitching yarns, and the stitching yarn has a linear expansion coefficient in the fiber axial direction of -1×10⁻⁶ to 70×10⁻⁶/K after heated at 180°C for 2 hours and then cooled.

In the present invention, the reinforcement fiber sheet is preferably a reinforcement fiber sheet made of unidirectionally drawn and aligned reinforcement fiber, and the reinforcement fiber sheets made of unidirectionally drawn and aligned reinforcement fiber are more preferably laminated layer by layer by altering the fiber axial direction.

The present invention includes a method for manufacturing a stitched fiber-reinforced substrate material by stitching a reinforcement fiber sheet made of reinforcement fiber using stitching yarns having a linear expansion coefficient of -1×10⁻⁶ to 70×10⁻⁶/K in the fiber axial direction after heated at 180°C for 2 hours and then cooled, and a preform material composed of the stitched fiber-reinforced substrate material of the present invention and a binder resin, and a fiber reinforced composite material composed of the stitched fiber-reinforced substrate material of the present invention and a matrix resin.

### [Advantageous Effects of Invention]

The fiber reinforced composite material produced using the stitched fiber-reinforced substrate material of the present invention significantly suppresses the formation of microcracks due to stitching yarn. Therefore, the mechanical properties of the fiber reinforced composite material can be kept high.

### [Description of Embodiments]

Hereinafter, the stitched fiber-reinforced substrate material, the preform material, and the fiber reinforced composite material of the present invention, and the manufacturing method thereof will be described.

### 1. Stitched fiber-reinforced substrate material

The stitched fiber-reinforced substrate material of the present invention is formed by stitching reinforcement fiber sheets using stitching yarns. In the present invention, the stitching yarn is a stitching yarn having a linear expansion coefficient of -1×10⁻⁶ to 70×10⁻⁶/K in the fiber axial direction after heated at 180°C for 2 hours and then cooled. Use of such a stitching yarn can reduce, at the interface between the single yarn of the stitching yarn and the matrix resin constituting the fiber reinforced composite material, generation of internal stress especially due to thermal shock, and the subsequent interfacial delamination and local stress concentration. Therefore, use of such a stitching yarn in a stitched fiber-reinforced substrate material can suppress the formation of microcracks due to stitching yarn in the obtained fiber reinforced composite material.

The weight per area of the stitched fiber-reinforced substrate material of the present invention is preferably 200 to 2000 g/m², and more preferably 200 to 1000 g/m². The thickness of the stitched fiber-reinforced substrate material, though appropriately selected depending on the intended use and the like of the molded product, is usually preferably 0.1 to 2 mm.

### 1-1. Stitching yarn

The stitching yarn used in the present invention is a stitching yarn having a linear expansion coefficient of -1×10⁻⁶ to 70×10⁻⁶/K in the fiber axial direction after heated at 180°C for 2 hours and then cooled. In the present invention, the linear expansion coefficient is a linear expansion coefficient measured in the temperature range of -50 to 70°C. In the present invention, the linear expansion coefficient is preferably 5×10⁻⁶ to 50×10⁻⁶/K, and more preferably 10×10⁻⁶ to 30×10⁻⁶/K. Further, the linear expansion coefficient of the stitching yarn is preferably equal to or less than the linear expansion coefficient of the matrix resin (CTEm (×10⁻⁶/K)) to be combined when forming the fiber reinforced composite material, and is preferably set to in the range of CTEm (×10⁻⁶/K) to (CTEm - 30) (×10⁻⁶/K). Further, the linear expansion coefficient of the stitching yarn is also preferably equal to or more than the linear expansion coefficient in the fiber direction of the reinforcement fiber (CTEf (×10⁻⁶/K)) used for the reinforcement fiber sheet, and is preferably set to in the range of CTEf (×10⁻⁶/K) to (CTEf + 30) (×10⁻⁶/K).

When a stitching yarn having such a linear expansion coefficient is used, the difference in the volume change due to thermal expansion between the stitching yarn and the matrix resin phase is small, which makes it unlikely to cause generation of internal stress and interfacial delamination at the interface between the stitching yarn and the matrix resin phase. In particular, even when a hot-cold shock is repeatedly applied to the fiber reinforced composite material, internal stress due to the difference in the thermal expansion or thermal contraction between the stitching yarn and the matrix resin is unlikely to be generated, and thus interfacial delamination and formation and growth of microcracks can be suppressed.

The linear expansion coefficient of the stitching yarn can be adjusted by the linear expansion coefficient characteristic to the material of the fiber to be used, and the drawing treatment or heat treatment applied to the fiber when the fiber is manufactured. When using a fiber having a glass transition temperature (Tg) or a softening point of 180°C or less as the stitching yarn of the present invention, the fiber is preferably selected so that the linear expansion coefficient characteristic to the fiber is within a desired range because the selection facilitates adjusting the linear expansion coefficient of the stitching yarn within the desired range. On the other hand, when using a fiber having a Tg or a softening point of over 180°C or a fiber having no Tg as the stitching yarn, the linear expansion coefficient can be adjusted to be a desired value by the drawing treatment or heat treatment when the fiber is manufactured.

The type of fiber used as the stitching yarn in the present invention is not particularly limited, and there is preferably used polyolefin fiber, such as polyethylene fiber and polypropylene fiber, polyamide fiber, such as aliphatic polyamide fiber, semi-aromatic polyamide fiber, and fully aromatic polyamide fiber, polyester fiber, cellulose fiber, and the like. From the viewpoint of heat resistance, a fiber made of an aromatic compound is preferably used, and a fiber made of a fully aromatic compound is more preferably used.

Among these fibers, a fiber having a polar group in the chemical structure of the compound constituting the fiber is preferably used. The fiber having a polar group in the chemical structure has an excellent affinity with the matrix resin, and the interfacial delamination between the stitching yarn and the matrix resin is suppressed more easily. As the polar group, hydroxy group, epoxy group, ester group, amino group, amide group, and the like are preferably mentioned. Among these, fibers having a hydroxy group or amide group are particularly preferable. Such a polar group may be contained in the main chain or the side chain of the chemical structure of the compound constituting the fiber, but is preferably contained in the main chain from the viewpoint of improving the adhesiveness with the matrix resin.

Further, when a thermosetting resin is used as the matrix resin, and a reactive group such as a hydroxy group, amino group, or epoxy group is contained in the fiber as the polar group, the reactive group contained in the fiber and the thermosetting resin react to form a covalent bond at the interface between the matrix resin and the fiber in the process of manufacturing the fiber reinforced composite material, thereby further improving the interfacial adhesiveness between the stitching yarn and the matrix resin.

The stitching yarn used in the present invention is preferably a stitching yarn having an amorphous structure on the fiber surface, and is also preferably a stitching yarn having pores on the fiber surface. The amorphous structure and the pore structure on the fiber surface are easily impregnated with the matrix resin, which enhances the interfacial adhesiveness between the stitching yarn and the matrix resin, and the interfacial delamination between the stitching yarn and the matrix resin is suppressed more easily.

The fineness of the stitching yarn, though not particularly specified, is preferably 10 to 70 dTex, and more preferably 15 to 40 dTex. The single yarn diameter of the stitching yarn is preferably 10 to 40 µm. The number of filaments in the stitching yarn is preferably 1 to 50 and more preferably 4 to 24.

In the present invention, a fiber that does not contain a fiber oiling agent is preferably used as the stitching yarn, or a fiber from which the fiber oiling agent applied to the stitching yarn has been removed in advance is also preferably used. Further, preferably used is a stitching yarn formed by imparting an organic compound having a polar group to a fiber that does not contain a fiber oiling agent or a fiber from which the oiling agent has been removed. Here, the condition that the stitching yarn does not contain the fiber oiling agent means that the adhered amount of the oiling agent other than the organic compound having a polar group is 1% by mass or less. The polar group contained in the organic compound having a polar group may be appropriately selected in consideration of affinity with the matrix resin, and examples thereof include hydroxy group, amino group, phenol group, lactam group, and epoxy group. When a curable resin is used as the matrix resin, the polar group is preferably a polar group that reacts with the matrix resin at curing to form a covalent bond.

Too high reactivity of the polar group may impair stability as a treatment agent for applying the organic compound to the fiber, and thus the polar group is more preferably a hydroxy group, phenol group or epoxy group. When the stitching yarn is used in combination with an epoxy resin as a matrix resin for a composite material, the polar group is particularly preferably an epoxy group. Examples of the organic compound having an epoxy group as a polar group include an aromatic epoxy compound having an aromatic group and an aliphatic epoxy compound consisting only of an aliphatic group, and, in the present invention, one kind or a plurality of kinds of aliphatic compounds is preferably used. Examples of the aliphatic epoxy compound include glycidyl ether compound, obtained by reacting an aliphatic alcohol or an aliphatic polyol with epihalohydrin, such as monoglycidyl ether compound, diglycidyl ether compound, and polyglycidyl ether compound.

When an epoxy resin is used as a matrix resin, an epoxy adhesive oiling agent having high adhesiveness to the epoxy resin is preferably used as an organic compound having a polar group. As the epoxy adhesive oiling agent, an organic compound having a polyoxyalkylene structure is preferably used.

When an organic compound having a polar group is applied to the stitching yarn, the adhered amount thereof is preferably 0.1 to 10 wt%. Further, a hydrophilic treatment is also preferably performed on the stitching yarn to improve hydrophilicity of the surface of the fiber and thus improve adhesiveness with the matrix resin. Examples of the hydrophilic treatment include corona treatment and plasma treatment.

Use of such a stitching yarn can further suppress the interfacial delamination between the stitching yarn and the resin, and further suppress the generation of microcracks.

The stitched fiber-reinforced substrate material of the present invention preferably uses the stitching yarn at an amount of preferably 1 to 10 g/m², and more preferably 2 to 5 g/m².

### 1-2. Reinforcement fiber sheet

For the reinforcement fiber sheet used in the present invention, there can be used materials used for ordinary fiber reinforced material, such as carbon fiber, glass fiber, aramid fiber, boron fiber, and metal fiber. Among these, carbon fiber is preferable. Further, as the reinforcement fiber used in the present invention, a reinforcement fiber having a linear expansion coefficient (CTEf) in the fiber direction in the range of -10×10⁻⁶ to 10×10⁻⁶/K is preferably used.

In the present invention, as the reinforcement fiber sheet, a reinforcement fiber sheet obtained by processing a continuous fiber bundle of reinforcement fiber into a sheet shape is preferably used, and a reinforcement fiber sheet composed of unidirectionally drawn and aligned reinforcement fiber is more preferably used. Further, it is particularly preferable to use a reinforcement fiber sheet (laminate substrate material) in which reinforcement fiber sheets made of unidirectionally drawn and aligned reinforcement fiber are laminated layer by layer by altering the fiber axial direction. Although the reinforcement fibers constituting the reinforcement fiber sheet may be partially cut by making a notch and the like in the sheet in order to enhance shapeability of the sheet when molding the composite material, the reinforcement fiber is still used preferably in a continuous-fiber state from the viewpoint of improving the physical properties of the obtained composite material. Even when the reinforcement fiber is cut and used, the fiber length of the reinforcement fiber is preferably maintained at 10 cm or more.

The laminate structure of the reinforcement fiber sheets is such that the sheets are preferably laminated layer by layer by altering the fiber axial direction of the reinforcement fiber, and more preferably laminated by altering the fiber axial direction to an appropriately selected angle from 0°, ± 45°, and 90°. These angles mean that the fiber axial directions of thread line of the reinforcement fiber are at 0°, ±45°, and 90° with respect to a predetermined direction of the stitched fiber-reinforced substrate material, respectively. The reinforcement fiber sheet is particularly preferable to have a laminate structure of -45°, 0°, +45°, 90°, 90°, +45°, 0°, -45°. Lamination at such angles can enhance isotropy of the obtained fiber reinforced composite material. The number of lamination of reinforcement fiber sheets is not limited, but is preferably about 2 to 8 layers.

The stitched fiber-reinforced substrate material of the present invention is given by stitching the above reinforcement fiber sheet using stitching yarns. The stitching method of the stitched fiber-reinforced substrate material is not particularly limited, but preferably, a multiple reinforcement fiber sheets is stitched up using the stitching yarns, and more preferably, all the reinforcement fiber sheets are stitched and integrated using the stitching yarns.

Each reinforcement fiber sheet used in the present invention is preferably composed of only a thread line of unidirectionally drawn and aligned reinforcement fiber, and no other thread line (weft) is preferably used in the direction other than the unidirection. Unidirectional drawing and aligning of the reinforcement fiber improves linearity of thread line of the reinforcement fiber, and thus improves the mechanical properties of the obtained fiber reinforced composite material. Further, after the fiber reinforced composite material is formed, generation of the resin-rich part is suppressed, and thus formation of microcracks is easily suppressed.

In the stitched fiber-reinforced substrate material of the present invention, a binder resin for forming a preform may be attached on the surface of the reinforcement fiber sheet, and a resin sheet or the like may be further laminated.

In the stitched fiber-reinforced substrate material of the present invention, a resin material may be provided on the surface of the reinforcement fiber sheet. Providing the resin material on the surface of the reinforcement fiber sheet can improve impact resistance of the fiber reinforced composite material manufactured by using the stitched fiber-reinforced substrate material. Further, when the stitched fiber-reinforced substrate material is formed by laminating a multiple reinforcement fiber sheets, the resin material is preferably provided on the surface of each reinforcement fiber sheet (provided between the reinforcement fiber sheets).

The form of the resin material is not particularly limited, and there can be used a particulate form, fibrous form, or the like, or a sheet-like form, such as film or cloth. From the viewpoint of productivity of the stitched fiber-reinforced substrate material, the sheet-like form is preferable, and more preferably a non-woven fabric form.

The type of resin material to be provided on the surface of the reinforcement fiber sheet is not particularly limited, and known resins such as thermosetting resin and thermoplastic resin can be used. From the viewpoint of improving the impact resistance of the fiber reinforced composite material, a thermoplastic resin is preferably used. Lamination of the reinforcement fiber sheet provided with the above resin material on the surface allows the resin material to be provided between the layers, and thus also can improve the impact resistance of the fiber reinforced composite material.

When a thermoplastic resin is used as the resin material, its melting point is preferably equal to or lower than the matrix resin curing temperature in the manufacturing process of the fiber reinforced composite material. For example, when the heating temperature in the curing step is 180°C, the melting point of the resin material is preferably 160 to 180°C. In the present invention, the melting point of the thermoplastic resin is the temperature obtained at the intersection of each tangent of the melt endothermic peak and the baseline obtained by differential scanning calorimetry (DSC measurement) in the presence of the same amount of matrix resin.

When the resin material is used as a non-woven fabric, the raw material thereof is not particularly limited, and there is preferably used polyolefin fiber, such as polyethylene fiber and polypropylene fiber, polyamide fiber, such as aliphatic polyamide fiber, semi-aromatic polyamide fiber, and fully aromatic polyamide fiber, polyester fiber, cellulose fiber, and the like. From the viewpoint of heat resistance, a fiber made of an aromatic compound is more preferably used.

Among these raw materials, a fiber having a polar group in the chemical structure is preferably used. The fiber having a polar group in the chemical structure has an excellent affinity with the matrix resin, and can enhance the interfacial adhesiveness between the non-woven fabric and the matrix resin. As the polar group, hydroxy group, epoxy group, ester group, amino group, amide group, and the like are preferably mentioned. Among these, fibers having a hydroxy group or amide group are particularly preferable. Such a polar group may be contained in the main chain or side chain of the chemical structure of the fiber, but is preferably contained in the main chain.

Further, when a thermosetting resin is used as the matrix resin, and a reactive group such as a hydroxy group, amino group, or epoxy group is contained in the fiber as the polar group, the reactive group contained in the fiber and the thermosetting resin react to form a covalent bond at the interface between the matrix resin and the fiber in the process of manufacturing the fiber reinforced composite material, thereby further improving the interfacial adhesiveness between the stitching yarn and the matrix resin.

The non-woven fabric used in the present invention preferably has a low crystallinity of the constituent fibers, and is also preferably has pores on the fiber surface. The amorphous structure and the pore structure on the fiber surface are easily impregnated with the matrix resin, and thus improve the interfacial adhesiveness between the non-woven fabric and the matrix resin, and the interfacial delamination between the non-woven fabric and the matrix resin is suppressed more easily. The fiber diameter of the fiber used as a raw material for the non-woven fabric is preferably 1 to 50 µm, and more preferably 5 to 30 µm. The weight per area of the resin material (when provided between layers of the reinforcement fiber sheet, weight per area for 1 layer of the resin material) is preferably 1 to 20 g/m², and more preferably 3 to 10 g/m².

The stitched fiber-reinforced substrate material of the present invention can be manufactured by stitching the reinforcement fiber sheet described above using a stitching yarn having a linear expansion coefficient in the fiber axial direction of -1×10⁻⁶ to 70×10⁻⁶/K after heated at 180°C for 2 hours and then cooled.

### 2. Preform material

When the fiber reinforced composite material is molded using the stitched fiber-reinforced substrate material of the present invention, the stitched fiber-reinforced substrate material can be used as it is, but, from the viewpoint of handleability and workability, there is preferably used a preform material that is obtained by stacking the stitched fiber-reinforced substrate material and pre-shaping the stack.

The preform material is manufactured by the following process: the stitched fiber-reinforced substrate material of the present invention, or the stitched fiber-reinforced substrate material of the present invention and another fiber-reinforced substrate material are stacked on one face of the preform production die to a desired thickness, a powder of a resin (binder resin) to be a binder is sprayed or a resin sheet of a binder resin is laminated as necessary, and the stack is preformed by heating under pressure by a press or the like which uses a heating plate or the like. The resin to be a binder is melted by heating, and the stitched fiber-reinforced substrate materials of the present invention among themselves, or the stitched fiber-reinforced substrate material of the present invention and another reinforcement fiber sheet are molded together after the preforming die to give a preform material retaining the shape of the preforming die.

The resin material used as the binder resin is not particularly limited, and thermosetting resins, such as epoxy resin and vinyl ester resin, thermoplastic resins, such as polyamide and polyethersulfone, and mixtures thereof can be appropriately used. These resins may be used by spraying powder, or may be formed as a sheet, non-woven fabric, or the like and laminated on the stitched fiber-reinforced substrate material of the present invention. Alternatively, it may be attached in advance to each thread line of the reinforcement fiber constituting the stitched fiber-reinforced substrate material of the present invention.

The amount of the binder resin constituting the preform material is preferably 1 to 20 parts by mass, and more preferably 5 to 10 parts by mass with respect to 100 parts by mass of the stitched fiber-reinforced substrate material of the present invention. The thickness of the preform material varies depending on the purpose of use, but is preferably 1 to 40 mm.

The preform material can be made into a fiber reinforced composite material by a known molding method, such as a resin transfer molding method (RTM method) or a resin film infusion molding method (RFI method). The preform material produced by the above methods retains its three-dimensional shape even after preforming. Therefore, the preform material can be moved from the preform production die to the fiber reinforced composite material production die without losing the shape. Accordingly, there is no need of stacking directly on the molding die used for production of the fiber reinforced composite material, which can reduce the occupancy time of the molding die, and thus productivity of the fiber reinforced composite material is improved.

### 3. Fiber reinforced composite material (FRP)

The fiber reinforced composite material of the present invention comprises the stitched fiber-reinforced substrate material of the present invention and a matrix resin formulation. The fiber reinforced composite material is produced by impregnating the stitched fiber-reinforced substrate material of the present invention with the matrix resin formulation and molding the stitched substrate material and the matrix resin formulation while they are in a composite state. The method for producing the fiber reinforced composite material is not particularly limited, and there may be molded a prepreg in which a matrix resin formulation is impregnated in advance into a fiber-reinforced substrate material, and the fiber-reinforced substrate material and the matrix resin formulation may be simultaneously molded and composited using a resin transfer molding method (RTM method), a resin film infusion molding method (RFI method) or the like. The stitched fiber-reinforced substrate material of the present invention can be preferably used in a molding method such as RTM method and RFI method. The linear expansion coefficient of the matrix resin (CTEm) is preferably 40×10⁻⁶ to 70×10⁻⁶/K.

As the matrix resin used in the present invention, a thermosetting resin or a thermoplastic resin is used. Specific examples of the thermosetting matrix resin include epoxy resin, unsaturated polyester resin, phenol resin, melamine resin, polyurethane resin, silicone resin, maleimide resin, vinyl ester resin, cyanate ester resin, resin prepolymerized from maleimide resin and cyanate ester resin, urethane acrylate resin, phenoxy resin, alkyd resin, urethane resin, bismaleimide resin, polyimide resin and polyisoimide resin having an acetylene terminal, and polyimide resin having a nadic acid terminal. These can also be used as one kind or a mixture of two or more kinds. Among these, epoxy resin, vinyl ester resin, bismaleimide resin, and polyimide resin which have excellent heat resistance, elastic modulus, and chemical resistance are particularly preferable. In addition to the curing agent and the curing accelerator, these thermosetting resins may contain commonly used colorants, various additives, and the like. In order to improve the impact resistance of the matrix resin, a thermoplastic resin is preferably contained.

Examples of the thermoplastic resin used as the matrix resin include polypropylene, polysulfone, polyethersulfone, polyetherketone, polyetheretherketone, polyetherketoneketone, aromatic polyamide, aromatic polyester, aromatic polycarbonate, polyetherimide, polyarylene oxide, thermoplastic polyimide, polyamide, polyamideimide, polyacetal, polyphenylene sulfide, polyarylate, polyacrylonitrile, and polybenzimidazole.

The fiber reinforced composite material of the present invention is produced preferably using RTM method from the viewpoint of efficient production for a complicated-shaped fiber reinforced composite material. Here, RTM method means the following method: the stitched fiber-reinforced substrate material is placed in the molding die, then impregnated with an uncured thermosetting resin formulation in liquid state or a molten thermoplastic resin formulation as a matrix resin, and then the matrix resin is cured or solidified to obtain fiber reinforced composite material.

In the present invention, the mold used in RTM method may be a closed mold made of a rigid material, or an open mold made of a rigid material and a flexible film (bag) can also be used. In the latter case, the stitched fiber-reinforced substrate material can be placed between the open mold of the rigid material and the flexible film. As the rigid material, there are used various existing materials including metal, such as steel and aluminum, fiber reinforced plastic (FRP), wood, and gypsum. Polyamide, polyimide, polyester, fluororesin, silicone resin and the like are used as material of the flexible film.

In RTM method, when a closed mold of a rigid material is used, the mold is usually pressed and clamped, and then the matrix resin formulation is pressurized and injected. At this time, a suction port may be provided in addition to the injection port and connected to a vacuum pump for suction. The matrix resin formulation may be injected only by atmospheric pressure due to suction without use of special pressurizing means. This method can be suitably used to manufacture a large-sized member by providing a plurality of suction ports.

In RTM method, when an open mold of a rigid material and a flexible film are used, the matrix resin formulation may be injected only by atmospheric pressure due to suction without use of special pressurizing means. A resin distribution medium is effectively used to realize good impregnation for injection only by atmospheric pressure. Further, a gel coat is preferably applied to the surface of the rigid material before placing the stitched fiber-reinforced substrate material.

In RTM method, when a thermosetting resin is used as the matrix resin, the stitched fiber-reinforced substrate material is impregnated with the matrix resin formulation and then heat-cured. The mold temperature at heat curing is usually selected to be higher than that at injecting the thermosetting resin formulation. The mold temperature at heat curing is preferably 80 to 200°C. The heat curing time is preferably 1 minute to 20 hours. After the heat curing is completed, the fiber reinforced composite material is demolded and taken out. Then, the obtained fiber reinforced composite material may be heated at a higher temperature for postcure. The postcure temperature is preferably 150 to 200°C, and the time is preferably 1 minute to 4 hours.

When an epoxy resin is used as the matrix resin, the impregnation pressure for impregnating the epoxy resin formulation into the stitched fiber-reinforced substrate material by RTM method is appropriately determined in consideration of the viscosity/resin flow and the like of the resin formulation. The specific impregnation pressure is 0.001 to 10 MPa and preferably 0.01 to 1 MPa. When the fiber reinforced composite material is obtained by RTM method, the viscosity of the epoxy resin formulation at 100°C is preferably less than 5000 mPa·s, and more preferably 1 to 1000 mPa·s.

The amount of the matrix resin formulation is preferably 20 to 60 parts by mass and more preferably 30 to 40 parts by mass with respect to 100 parts by mass of the stitched fiber-reinforced substrate material.

In the present molding method, the viscosity of the matrix resin formulation is preferably 0.01 to 1 Pa s at the injection temperature. The viscosity at injection of the resin to be injected is preferably adjusted within the above range by a method such as preheating.

The fiber reinforced composite material thus obtained becomes a composite material having suppressed generation of microcracks. The crack density of the composite material is preferably low, specifically, the crack density is preferably 0.30 cracks/(cm·ply) or less, more preferably 0.20 cracks/(cm ply) or less, and further preferably 0.15 cracks/(cm·ply) or less.

### [Examples]

Hereinafter, the present invention will be described in more detail by way of examples, but the present invention is not limited to the examples. The components and test methods used in this example and comparative example are described below.

### [Stitching yarn]

- Stitching yarn 1: Cuprammonium rayon fiber (cellulose fiber) manufactured by Asahi Kasei Corporation, Bemberg (registered trademark), 33T24, Fineness: 33dTex, Number of single filaments: 24, Linear expansion coefficient: 12×10⁻⁶/K
- Stitching yarn 2: Polyamide fiber manufactured by EMS-CHEMIE, Grilon (registered trademark), K-203, 33T8, Fineness: 33dTex, Number of single filaments: 8, Linear expansion coefficient: 30×10⁻⁶/K
- Stitching yarn 3: Polyamide fiber made by EMS-CHEMIE, Grilon (registered trademark), K-178, 33T6, Fineness: 33dTex, Number of single filaments: 6, Linear expansion coefficient: 70×10⁻⁶/K
- Stitching yarn 4: Polyester fiber manufactured by KB Seiren Ltd., 33T-12-SOD0, Fineness: 33dTex, Number of single filaments: 12, Linear expansion coefficient: 100×10⁻⁶/K
- Stitching yarn 5: Cuprammonium rayon fiber (cellulose fiber) manufactured by Asahi Kasei Corporation, Bemberg (registered trademark), 44T24, Fineness: 44dTex, Number of single filaments: 24, Linear expansion coefficient: 12×10⁻⁶/K
- Stitching yarn 6: Cuprammonium rayon fiber (cellulose fiber) manufactured by Asahi Kasei Corporation, Bemberg (registered trademark), 56T30, Fineness: 56dTex, Number of single filaments: 30, Linear expansion coefficient: 12×10⁻⁶/K

### [Interlayer non-woven fabric]

- Non-woven fabric 1: Polyamide 12, Average fiber diameter: 20 µm, Weight per area: 6 g/m², Melting point: 170°C
- Non-woven fabric 2: Polyamide 612, Average fiber diameter: 20 µm, Weight per area: 6 g/m², Melting point: 200°C

### [Reinforcement fiber]

As reinforcement fiber, carbon fiber strand "Tenax (registered trademark)" HTS40-12K (manufactured by Teijin Limited, Tensile strength 4.2 GPa, Tensile elastic modulus 240 GPa, Linear expansion coefficient: -0.5×10⁻⁶/K) was used.

### [Liquid thermosetting resin formulation]

An amine-curable epoxy resin was used as the matrix resin for the carbon fiber composite material. The formulation is as follows. The linear expansion coefficient of the cured product was 55×10⁻⁶/K.

### (Epoxy resin)

- Tetraglycidyl-4,4'-diaminodiphenylmethane (Araldite (registered trademark) MY721 manufactured by Huntsman Japan KK) 20 parts by mass
- Triglycidyl-p-aminophenol (Araldite (registered trademark) MY0510 manufactured by Huntsman Japan KK) 30 parts by mass
- Triglycidyl-m-aminophenol (Araldite (registered trademark) MY0610 manufactured by Huntsman Japan KK) 30 parts by mass
- Bisphenol-F diglycidyl ether based epoxy resin (Araldite (registered trademark) PY306 manufactured by Huntsman Japan KK) 20 parts by mass

### (Curing agent)

- 4,4'-diamino-3,3'-diisopropyl-5,5'-dimethyldiphenylmethane (Lonzacure (registered trademark) M-MIPA manufactured by Lonza Japan Co., Ltd.) 67 parts by mass

### [Evaluation method]

### (1) Fiber fineness

The obtained fiber was wound up to 100 m using a sizing reel, and the mass was measured. The obtained mass was multiplied by 100 to calculate the mass per 10000 m, and the value was taken as fineness (dtex).

### (2) Linear expansion coefficient

After the fiber sample was heated at 180°C for 2 hours while preventing tension to be applied on the sample and then cooled, the linear expansion coefficient in the line axial direction was measured by a thermomechanical analysis apparatus (TA Instruments model: TMA Q400).

### [Measurement condition]

Ramp start temperature: -60°C
Measurement temperature range: -50 to 70°C
Ramp end temperature: 100°C
Temperature ramp rate: 5°C/min
Load: 0.0001 N

### (3) Measurement of melting point of non-woven fabric

A non-woven fabric (3 mg) and an epoxy resin (3 mg) in the above liquid thermosetting resin formulations were weighed into an aluminum pan and used as a sample. The intersection of each tangent of the melt endothermic peak and the baseline was determined as the onset melting point by DSC (DSC3500 Sirius manufactured by NETZSCH).

### [Measurement condition]

Measurement temperature range: Room temperature to 250°C
Temperature ramp rate: 5°C/min

### (4) Hot-cold shock test

A hot-cold shock tester (TSA-73EH-W manufactured by ESPEC CO., LTD.) was used to subject the fiber reinforced composite material to 1000 times of hot-cold cycles. One cycle of the hot-cold cycle was set to consist of a flat range at -55°C for 15 minutes, followed by a ramp range reaching 70°C for 15 minutes, a flat range at 70°C for 15 minutes, and then a ramp range going back to -55°C for 15 minutes, which cycle was repeated 1000 times.

### (5) Crack density

The number of cracks after the hot-cold shock test in the cross section inside the fiber reinforced composite material test piece was measured by microscopic observation. VHX-5000 manufactured by KEYENCE CORPORATION was used as a microscope for observation at a magnification of 200 times. Specifically, the test piece (width 80 mm × length 50 mm × thickness 5 mm) after the hot-cold shock test was cut into four equal parts of width 40 mm × length 25 mm, and the cut surface in the thickness direction was mirror-polished to give an observation surface for each of the long side and the short side. The microcracks are observed using a microscope in an observation range of 50 mm² or more, and the number of cracks measured is divided by the number of layers and the width of the observation surface to give the value of crack density. The unit of crack density is cracks/(cm·ply). The crack density values obtained from the observations on the long and short sides were averaged to give the final crack density.

### [Example 1]

Stitching yarn 1 having a linear expansion coefficient of 12×10⁻⁶/K was used as the stitching yarn. The stitching yarn was washed with an organic solvent to remove the fiber oiling agent adhering to the surface of the stitching yarn. The stitching yarn was washed by circulation washing for 12 hours using a Soxhlet extractor and a mixed solution of ethanol and benzene as an organic solvent. The stitching yarn after washing was dried in a vacuum dryer for 12 hours.

Four reinforcement fiber sheets with 200 reinforcement fibers unidirectionally drawn and aligned were prepared and laminated by altering angles in the order of -45°, 0°, +45°, 90° to give a laminate sheet of laminated four unidirectionally drawn and aligned reinforcement fiber sheets. Next, the laminate sheet was sewn (stitched) through the laminate sheet using a stitching yarn provided with a treatment agent to give a stitched fiber-reinforced substrate material (reinforcement fiber weight per area per layer: 190 g/m², stitching yarn usage amount: 4 g/m², stitched fiber-reinforced substrate material total weight per area: 764 g/m²).

The obtained stitched fiber-reinforced substrate material was cut into a size of 300×300 mm. Next, six stitched fiber-reinforced substrate materials were laminated on a mold release treated aluminum plate of 500×500 mm to form a laminate (preform material [-45°/0°/+45°/90°]₃ₛ).

Then, using the obtained laminate and the liquid thermosetting resin formulation, a fiber reinforced composite material was manufactured by a resin transfer molding method. First, on the laminate laminated were Release Ply C (manufactured by AIRTECH) of peel cloth, which is a substrate material provided with a mold release function, and Resin Flow 90HT (manufactured by AIRTECH), which is a resin distribution substrate material. Then, hoses for forming a resin injection port and a resin discharge port were arranged, whole the mold was covered with a nylon bag film, sealed with a sealant tape, and the inside was evacuated. Subsequently, the aluminum plate was heated to 120°C, the pressure in the bag was reduced to 5 torr or less, and then the above-mentioned liquid thermosetting resin (33 parts by mass based on 100 parts by mass of the stitched substrate material) heated to 100°C was injected into the vacuum system through the resin injection port. The injected liquid thermosetting resin filled the bag and was impregnated into the laminate, and under this condition, the temperature was raised to 180°C and kept at 180°C for 2 hours to obtain a fiber reinforced composite material.

The crack density was measured using the obtained fiber reinforced composite material. As a result, almost no crack was generated, and the crack density was as low as 0.12 cracks/(cm·ply). The formation of microcracks was confirmed to be suppressed by using stitching yarn 1.

### [Example 2]

A stitched fiber-reinforced substrate material and a carbon fiber composite material were obtained in the same manner as in example 1 except that stitching yarn 2 having a linear expansion coefficient of 30×10⁻⁶/K was used instead of stitching yarn 1 as the stitching yarn. The crack density was measured using the obtained carbon fiber reinforced composite material. As a result, almost no microcrack was generated, and the crack density was as low as 0.16 cracks/(cm·ply).

### [Example 3]

A stitched fiber-reinforced substrate material and a carbon fiber composite material were obtained in the same manner as in example 1 except that stitching yarn 3 having a linear expansion coefficient of 70×10⁻⁶/K was used instead of stitching yarn 1 as the stitching yarn. The crack density was measured using the obtained carbon fiber reinforced composite material. As a result, a small amount of microcracks were generated, and the crack density was as low as 0.24 cracks/(cm·ply).

### [Comparative Example 1]

A stitched fiber-reinforced substrate material and a fiber reinforced composite material were obtained in the same manner as in example 1 except that stitching yarn 4 having a linear expansion coefficient of 100×10⁻⁶/K was used instead of stitching yarn 1 as the stitching yarn. The crack density was measured using the obtained fiber reinforced composite material. As a result, the generation of microcracks was observed remarkably, and the crack density was as high as 0.74 cracks/(cm·ply).

### [Example 4]

A stitched fiber-reinforced substrate material and a carbon fiber composite material were obtained in the same manner as in example 1 except that non-woven fabric 1 was arranged between each layer of the reinforcement fiber sheet. The crack density was measured using the obtained carbon fiber reinforced composite material. As a result, almost no microcrack was generated, and the crack density was as low as 0.03 cracks/(cm·ply). The formation of microcracks was confirmed to be suppressed by using stitching yarn 1 and non-woven fabric 1.

### [Example 5]

A stitched fiber-reinforced substrate material and a carbon fiber composite material were obtained in the same manner as in example 1 except that non-woven fabric 2 was arranged between each layer of the reinforcement fiber sheet. The crack density was measured using the obtained carbon fiber reinforced composite material. As a result, a small amount of microcracks were generated, and the crack density was as low as 0.28 cracks/(cm·ply).

### [Example 6]

A stitched fiber-reinforced substrate material and a carbon fiber composite material were obtained in the same manner as in example 1 except that stitching yarn 5 was used instead of stitching yarn 1 as the stitching yarn and non-woven fabric 1 was arranged between each layer of the reinforcement fiber sheet. The crack density was measured using the obtained carbon fiber reinforced composite material. As a result, a small amount of microcracks were generated, and the crack density was as low as 0.14 cracks/(cm·ply).

### [Example 7]

A stitched fiber-reinforced substrate material and a carbon fiber composite material were obtained in the same manner as in example 1 except that stitching yarn 6 was used instead of stitching yarn 1 as the stitching yarn and non-woven fabric 1 was arranged between each layer of the reinforcement fiber sheet. The crack density was measured using the obtained carbon fiber reinforced composite material. As a result, a small amount of microcracks were generated, and the crack density was as low as 0.25 cracks/(cm·ply).

**[Table 1]**

| | Stitching yarn | Linear expansion coefficient | Interlayer non-woven fabric | Crack density |
|---|---|---|---|---|
| | | ×10⁻⁶/K | | cracks/ (cm·ply) |
| Example 1 | stitching yarn 1 | 12 | none | 0.12 |
| Example 2 | stitching yarn 2 | 30 | none | 0.16 |
| Example 3 | stitching yarn 3 | 70 | none | 0.24 |
| Comparative example 1 | stitching yarn 4 | 100 | none | 0.74 |
| Example 4 | stitching yarn 1 | 12 | non-woven fabric 1 | 0.03 |
| Example 5 | stitching yarn 1 | 12 | non-woven fabric 2 | 0.28 |
| Example 6 | stitching yarn 5 | 12 | non-woven fabric 1 | 0.14 |
| Example 7 | stitching yarn 6 | 12 | non-woven fabric 1 | 0.25 |

### [Citation List]

### [Patent Literature]

[PTL 1] Japanese Unexamined Patent Application Publication (Translation of PCT Application) NO. 2012-511450

### [Non-patent literature]

[NPL 1] Pierre-Jacques Liotier et al., Composites: Part A 42 (2011), 425-437

## Claims

1. A stitched fiber-reinforced substrate material formed by stitching reinforcement fiber sheets made of reinforcement fibers using stitching yarns,
the stitching yarn having a linear expansion coefficient in the fiber axial direction of -1×10⁻⁶ to 70×10⁻⁶/K after heated at 180°C for 2 hours and then cooled.

2. The stitched fiber-reinforced substrate material according to claim 1, wherein the reinforcement fiber sheet is a reinforcement fiber sheet made of unidirectionally drawn and aligned reinforcement fiber.

3. The stitched fiber-reinforced substrate material according to claim 1 or 2, wherein the reinforcement fiber sheet is a reinforcement fiber sheet on which surface a resin material is arranged.

4. The stitched fiber-reinforced substrate material according to any one of claims 1 to 3, wherein the reinforcement fiber sheet is formed by laminating a reinforcement fiber sheet made of unidirectionally drawn and aligned reinforcement fiber layer by layer by altering the fiber axial direction.

5. The stitched fiber-reinforced substrate material according to any one of claims 1 to 4, wherein the stitching yarn is a stitching yarn to which an organic compound having a polar group is adhered.

6. A method for manufacturing a stitched fiber-reinforced substrate material, comprising: stitching a reinforcement fiber sheet made of reinforcement fiber using stitching yarns having a linear expansion coefficient of -1×10⁻⁶ to 70×10⁻⁶/K in the fiber axial direction after heated at 180°C for 2 hours and then cooled.

7. A preform material comprising: the stitched fiber-reinforced substrate material according to any one of claims 1 to 5 and a binder resin of 1 to 20 parts by mass with respect to 100 parts by mass of the stitched reinforcement fiber fiber-reinforced substrate material.

8. A method for manufacturing a preform material comprising: heating the stitched fiber-reinforced substrate material according to any one of claims 1 to 5 and a binder resin under pressure.

9. A fiber reinforced composite material comprising: the stitched fiber-reinforced substrate material according to any one of claims 1 to 5 and a matrix resin formulation of 20 to 60 parts by mass with respect to 100 parts by mass of the stitched fiber-reinforced substrate material.

10. A method for manufacturing a fiber reinforced composite material comprising: impregnating a matrix resin into the stitched fiber-reinforced substrate material according to any one of claims 1 to 5.

## Patentansprüche

1. Genähtes faserverstärktes Substratmaterial, das durch Vernähen von Verstärkungsfaserlagen aus Verstärkungsfasern unter Verwendung von Nähfäden gebildet ist,
wobei der Nähfaden einen linearen Ausdehnungskoeffizienten in der Faserachsenrichtung von -1×10⁻⁶ bis 70×10⁻⁶/K aufweist, nachdem er 2 Stunden lang bei 180°C erwärmt und dann abgekühlt wurde.

2. Genähtes faserverstärktes Substratmaterial nach Anspruch 1, wobei die Verstärkungsfaserlage eine Verstärkungsfaserlage aus unidirektional gezogenen und ausgerichteten Verstärkungsfasern ist.

3. Genähtes faserverstärktes Substratmaterial nach Anspruch 1 oder 2, wobei die Verstärkungsfaserlage eine Verstärkungsfaserlage ist, auf deren Oberfläche ein Harzmaterial angeordnet ist.

4. Genähtes faserverstärktes Substratmaterial nach einem der Ansprüche 1 bis 3, wobei die Verstärkungsfaserlage durch schichtweises Laminieren einer Verstärkungsfaserlage aus unidirektional gezogenen und ausgerichteten Verstärkungsfasern unter Änderung der Faserachsenrichtung gebildet ist.

5. Genähtes faserverstärktes Substratmaterial nach einem der Ansprüche 1 bis 4, wobei der Nähfaden ein Nähfaden ist, an dem eine organische Verbindung mit einer polaren Gruppe befestigt ist.

6. Verfahren zum Herstellen eines genähten faserverstärkten Substratmaterials, umfassend: Vernähen einer Verstärkungsfaserlage aus Verstärkungsfasern unter Verwendung von Nähfäden, die einen linearen Ausdehnungskoeffizienten in der Faserachsenrichtung von -1×10⁻⁶ bis 70×10⁻⁶/K aufweisen, nachdem sie 2 Stunden lang bei 180°C erwärmt und dann abgekühlt wurden.

7. Vorformlingmaterial, umfassend: das genähte faserverstärkte Substratmaterial nach einem der Ansprüche 1 bis 5 und ein Bindemittelharz mit 1 bis 20 Masseteilen bezogen auf 100 Masseteile des genähten, mit Verstärkungsfasern faserverstärkten Substratmaterials.

8. Verfahren zum Herstellen eines Vorformlingmaterials, umfassend: Erwärmen des genähten faserverstärkten Substratmaterials nach einem der Ansprüche 1 bis 5 und eines Bindemittelharzes unter Druck.

9. Faserverstärktes Verbundmaterial, umfassend: das genähte faserverstärkte Substratmaterial nach einem der Ansprüche 1 bis 5 und eine Matrixharzformulierung mit 20 bis 60 Masseteilen bezogen auf 100 Masseteile des genähten faserverstärkten Substratmaterials.

10. Verfahren zum Herstellen eines faserverstärkten Verbundmaterials, umfassend: Tränken des genähten faserverstärkten Substratmaterials nach einem der Ansprüche 1 bis 5 mit einem Matrixharz.

## Revendications

1. Matériau de substrat renforcé par des fibres cousu formé par des feuilles de fibres de renforcement de couture composées de fibres de renforcement utilisant des fils de couture,
le fil de couture ayant un coefficient d'expansion linéaire dans la direction axiale de fibre de -1 × 10⁻⁶ à 70 × 10⁻⁶/K après avoir été chauffé à 180 °C pendant 2 heures et ensuite refroidi.

2. Matériau de substrat renforcé par des fibres cousu selon la revendication 1, la feuille de fibres de renforcement étant une feuille de fibres de renforcement composée d'une fibre de renforcement étirée de manière unidirectionnelle et alignée.

3. Matériau de substrat renforcé par des fibres cousu selon la revendication 1 ou 2, la feuille de fibres de renforcement étant une feuille de fibres de renforcement sur la surface de laquelle un matériau de résine est agencé.

4. Matériau de substrat renforcé par des fibres cousu selon l'une quelconque des revendications 1 à 3, la feuille de fibres de renforcement étant formée par stratification d'une feuille de fibres de renforcement composée d'une fibre de renforcement étirée de manière unidirectionnelle et alignée couche par couche en modifiant la direction axiale de fibre.

5. Matériau de substrat renforcé par des fibres cousu selon l'une quelconque des revendications 1 à 4, le fil de couture étant un fil de couture auquel est collé un composé organique ayant un groupe polaire.

6. Procédé pour la fabrication d'un matériau de substrat renforcé par des fibres cousu, comprenant : la couture d'une feuille de fibres de renforcement composée d'une fibre de renforcement utilisant des fils de couture ayant un coefficient d'expansion linéaire dans la direction axiale de fibre de -1 × 10⁻⁶ à 70 × 10⁻⁶/K après avoir été chauffé à 180 °C pendant 2 heures et ensuite refroidi.

7. Matériau de préforme comprenant : le matériau de substrat renforcé par des fibres cousu selon l'une quelconque des revendications 1 à 5 et une résine liante de 1 à 20 parties en masse par rapport à 100 parties en masse du matériau de substrat renforcé par des fibres de renforcement cousu.

8. Procédé pour la fabrication d'un matériau de préforme comprenant : chauffage du matériau de substrat renforcé par des fibres cousu selon l'une quelconque des revendications 1 à 5 et d'une résine liante sous pression.

9. Matériau composite renforcé par des fibres comprenant : le matériau de substrat renforcé par des fibres cousu selon l'une quelconque des revendications 1 à 5 et une formulation de résine de matrice de 20 à 60 parties en masse par rapport à 100 parties en masse du matériau de substrat renforcé par des fibres cousu.

10. Procédé pour la fabrication d'un matériau composite renforcé par des fibres comprenant : imprégnation d'une résine de matrice dans le matériau de substrat renforcé par des fibres cousu selon l'une quelconque des revendications 1 à 5.
